# EUROPEAN PATENT APPLICATION

(11) **EP 4 265 444 A1**
(43) Date of publication of application: **25.10.2023**
(21) Application number: 23164211.7
(22) Date of filing: 27.03.2023
(51) Int. Cl.: B60G 3/06, B60G 7/02, B60G 15/06, B60K 1/02, B60G 15/07, B60K 1/04

(54) **SUSPENSION DEVICE FOR VEHICLE**

(30) Priority: 21.04.2022 JP 2022070037
(71) Applicant: MAZDA MOTOR CORPORATION, Hiroshima 730-8670 (JP)
(72) Inventor: Hiramatsu, Masaya, Aki-gun, Hiroshima, 730-8670 (JP); Nishi, Takashi, Aki-gun, Hiroshima, 730-8670 (JP)
(74) Representative: Frick, Robert

(57) **Abstract**

[Problem] To provide, in a vehicle equipped with an electric motor, a suspension device for a vehicle capable of suppressing a change in a behavior of the vehicle during use of regenerative brakes and friction brakes.

[Means for Solution] The present invention is a suspension device 10 for a vehicle 1 equipped with an electric motor 30 for transmitting a drive force to wheels 34 via an output transmission shaft 32, the suspension device 10 including: a suspension arm 46 which is coupled to a vehicle body side and a wheel side and which is capable of swinging in a vehicle up-down direction; and a damper 48 which extends approximately perpendicular to a swinging axis A in a vehicle body-side mounting portion of the suspension arm 46 in a side view, wherein the swinging axis A of the suspension arm 46 and an imaginary line C perpendicular to a direction of extension of the damper 48 are approximately parallel to each other in a side view.

## Description

### [Technical Field]

The present invention relates to a suspension device for a vehicle and, particularly, to a suspension device for a vehicle equipped with an electric motor.

### [Background Art]

Conventionally, various suspension structures have been studied in order to satisfy all of steering stability, road surface followability, and ride quality of a vehicle. Patent Literature 1 discloses a suspension device provided with a damper which extends perpendicular to an H-shaped lower arm in a side view, wherein by causing a vehicle body-side swinging axis to extend parallel to a vehicle front-rear direction and causing a wheel-side swinging axis to extend inclined in the vehicle front-rear direction in a plan view, the suspension device minimizes torsion of the lower arm and the damper to make up-down movement smoother and achieves both an increase in wheel support rigidity of elastic bushing and easiness of strokes.

### [Citation List]

### [Patent Literature]

[Patent Literature 1] Japanese Patent Laid-Open No. 2018-002000

### [Summary of Invention]

### [Problem to be Solved by the Invention]

On the other hand, amidst research and development related to electric cars conducted in recent years, the present inventors carried out diligent studies with respect to an optimum suspension structure for electric cars.

Normally, in a vehicle equipped with a motor (electric motor), there are two kinds of brakes: a regenerative brake which uses the electric motor as a generator during deceleration, and a friction brake which uses a conventional hydraulic system. In this case, a difference in respective anti-lift angles of the regenerative brakes and the friction brakes occurs, with a point of application of a braking force of the regenerative brakes being a wheel center and a point of application of a braking force of the friction brakes being a center of tire-ground contact. Therefore, for example, during coordinated control of the regenerative brakes and the friction brakes, there is a risk that changing (causing a fluctuation of) the braking force of the regenerative brakes and the braking force of the friction brakes results in changing a behavior of a vehicle (mainly, a pitching behavior of the vehicle) due to the difference in anti-lift angles described above and may impart a sense of discomfort to a driver and occupants.

In consideration thereof, the present invention has been made in order to solve the problem described above and an object of the present invention is to provide, in a vehicle equipped with an electric motor, a suspension device for a vehicle capable of suppressing a change in a behavior of the vehicle during use of regenerative brakes and friction brakes.

### [Means for Solving the Problem]

In order to solve the problem described above, the present invention is a suspension device for a vehicle equipped with an electric motor for transmitting a drive force to wheels via an output transmission shaft, the suspension device characterized by including: a suspension arm which is coupled to a vehicle body side and a wheel side and which is capable of swinging in a vehicle up-down direction; and a damper which extends in a direction perpendicular to a swinging axis in a vehicle body-side mounting portion of the suspension arm in a side view, wherein the swinging axis of the suspension arm and an imaginary line perpendicular to a direction of extension of the damper extend in a direction parallel to each other in a side view.

According to the present invention configured as described above, since the swinging axis of the suspension arm and the imaginary line perpendicular to the direction of extension of the damper extend in a direction parallel to each other in a side view, a difference in anti-lift angles of the regenerative brakes and the friction brakes during braking can be prevented from occurring and, accordingly, a change in a pitching behavior of the vehicle can be suppressed even when the braking force of the regenerative brakes and the braking force of the friction brakes are changed during, for example, coordinated control of the regenerative brakes and the friction brakes. As a result, a change in behavior of the vehicle during use of the regenerative brakes and the friction brakes can be suppressed and a sense of discomfort imparted to an occupant can be reduced.

In addition, in the present invention, preferably, the swinging axis of the suspension arm extends in a direction coinciding with a vehicle front-rear direction in a bottom view.

According to the present invention configured as described above, by causing the swinging axis of the suspension arm to extend in a direction coinciding with the vehicle front-rear direction in a bottom view, a change in the behavior of the vehicle during use of the regenerative brakes and the friction brakes can be suppressed more reliably and a sense of discomfort imparted to an occupant can be reduced. In addition, the wheels can be made to linearly swing in a same direction as the direction of extension of the damper and, accordingly, a change in the behavior of the vehicle during use of the regenerative brakes and the friction brakes can be suppressed more effectively.

Furthermore, in the present invention, preferably, the suspension device for a vehicle is a rear suspension device for a rear wheel as a main drive wheel, and the swinging axis of the suspension arm of the rear suspension device extends obliquely upward in an inclined manner toward a front of the vehicle in a side view.

According to the present invention configured as described above, since an anti-lift angle is formed in the rear suspension device, a lift of a rear portion of the vehicle body during use of the regenerative brakes and the friction brakes is suppressed and, accordingly, a change in the pitching behavior of the vehicle during use of the regenerative brakes and the friction brakes can be suppressed more effectively.

In addition, in the present invention, preferably, the suspension arm is mounted to a vehicle body frame which is directly connected to a rear end portion of a battery case in a lower portion of a center of the vehicle and which extends in the vehicle front-rear direction and, at the same time, the suspension arm is positioned above a lower end of the battery case.

According to the present invention configured as described above, support rigidity of the wheels can be enhanced and a response delay to vehicle behavior (for example, a response delay to a cornering force) can be reduced.

Furthermore, in the present invention, preferably, the suspension device is a strut-type suspension device including a hub carrier in which an opening for allowing penetration by and for holding the output transmission shaft is formed in a center portion thereof and which supports a wheel, wherein a lower portion of the damper is mounted to the hub carrier, and an upper portion of the damper is mounted to the vehicle body.

According to the present invention configured as described above, the strut-type suspension can suppress a change in behavior of the vehicle during use of the regenerative brakes and the friction brakes.

### [Advantageous Effect of Invention]

With the suspension device for a vehicle according to the present invention, in a vehicle equipped with an electric motor, a change in a behavior of the vehicle during use of regenerative brakes and friction brakes can be suppressed.

### [Brief Description of Drawings]

FIG. 1 is a side view showing a schematic configuration of a vehicle to which a suspension device for a vehicle according to an embodiment of the present invention has been applied.
FIG. 2 is a perspective view showing, separated above and below, a vehicle body in an upper part of the vehicle, and a battery assembly, a vehicle body frame, a front suspension device, and a rear suspension device in a lower part of the vehicle shown in FIG. 1 as seen from a side of and from obliquely above the vehicle.
FIG. 3 is a perspective view showing the battery assembly, the vehicle body frame, and the rear suspension device in the lower part of the vehicle shown in FIG. 2 as seen from a rear of and from obliquely above the vehicle.
FIG. 4 is a side view of a rear suspension device on a left side of the vehicle in the rear suspension device shown in FIG. 3 as seen from the left side of the vehicle.
FIG. 5 is a bottom view of the rear suspension device on the left side of the vehicle in the rear suspension device shown in FIG. 3 as seen from below.
FIG. 6 is a conceptual diagram for explaining a relationship between an anti-tail-lift angle during friction braking and an anti-tail-lift angle during regenerative braking according to a comparative example (A) and an embodiment of the present invention (B).

### [Mode for Carrying Out the Invention]

Hereinafter, a suspension device for a vehicle according to an embodiment of the present invention will be described with reference to the accompanying drawings.

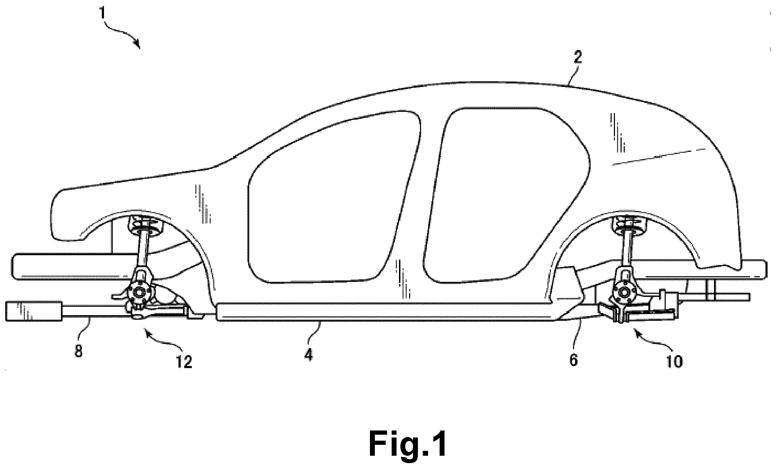

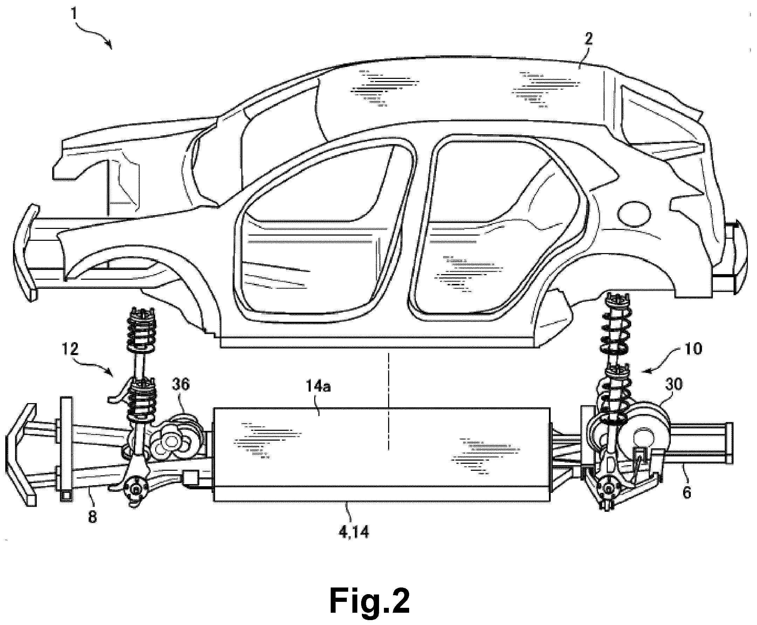

First, a schematic configuration of a vehicle to which the suspension device for a vehicle according to the embodiment of the present invention has been applied will be described with reference to FIG. 1 and FIG. 2. FIG. 1 is a side view showing a schematic configuration of the vehicle to which the suspension device for a vehicle according to the embodiment of the present invention has been applied, and FIG. 2 is a perspective view showing, separated above and below, a vehicle body in an upper part of the vehicle, and a battery assembly, a vehicle body frame, a front suspension device, and a rear suspension device in a lower part of the vehicle shown in FIG. 1 as seen from a side of and from obliquely above the vehicle.

First, as shown in FIG. 1 and FIG. 2, a vehicle 1 includes a vehicle body 2 constituted of a monocoque body in an upper part of the vehicle 1 and, below the vehicle body 2, a battery assembly 4 provided in a center portion in a vehicle front-rear direction, a rear vehicle body frame 6 which extends toward the rear of the vehicle from the battery assembly 4, a front vehicle body frame 8 which extends toward the front of the vehicle from the battery assembly 4, a rear suspension device 10 mounted to the rear vehicle body frame 6, and a front suspension device 12 mounted to the front vehicle body frame 8.

The battery assembly 4 includes a battery case 14 and a battery main body (not illustrated). Although not illustrated in FIG. 1 and FIG. 2, the battery case 14 further includes a cover member 14a which includes frame members of four sides constituted of extruded material or the like in the present embodiment, the battery main body being housed inside the frame members of four sides, the cover member 14a covering the battery main body from above and below.

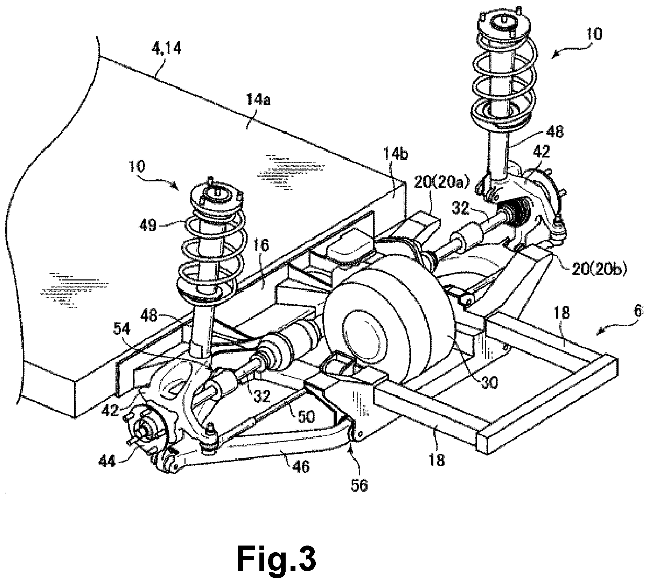

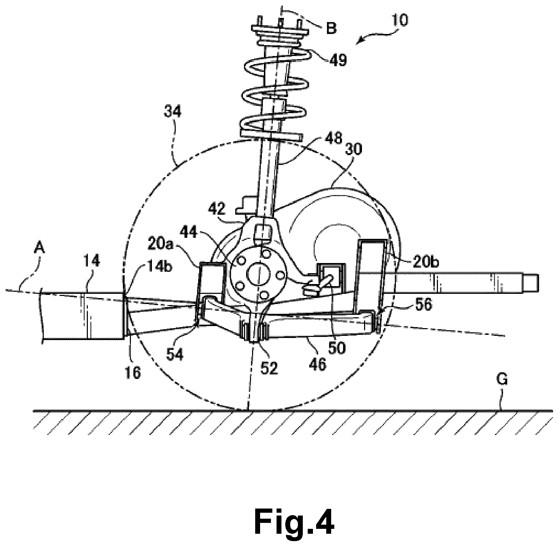

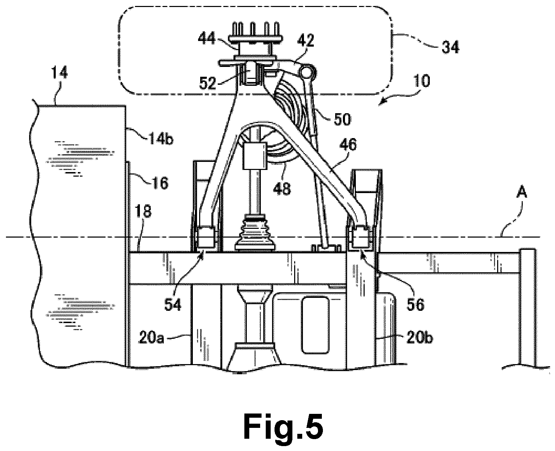

Next, a schematic configuration of each portion of the vehicle will be described with reference to FIG. 1 to FIG. 5. FIG. 3 is a perspective view showing the battery assembly, the vehicle body frame, and the rear suspension device in the lower part of the vehicle shown in FIG. 2 as seen from the rear of and from obliquely above the vehicle; FIG. 4 is a side view of a rear suspension device on a left side of the vehicle in the rear suspension device shown in FIG. 3 as seen from the left side of the vehicle; and FIG. 5 is a bottom view of the rear suspension device on the left side of the vehicle in the rear suspension device shown in FIG. 3 as seen from below.

First, as shown in FIG. 1 to FIG. 5, the rear vehicle body frame 6 includes a base member 16 which is fixed to a rear end edge of the battery case 14, two rear side frames 18 which are integrally formed with the base member 16 by welding or the like and which extend in the vehicle front-rear direction, and two rear cross members 20 which are mounted to the rear side frames 18 by fastening using bolts, welding, and the like.

The base member 16 of the rear vehicle body frame 6 is directly connected to a frame member 14b at the rear end edge of the battery case 14 by fastening using bolts, welding, and the like, and rigidity of a lower portion of the vehicle body is increased by the frame members of four sides of the battery case 14 and the rear vehicle body frame 6.

Next, as shown in FIG. 3 to FIG. 5, the rear cross members 20 function as rear suspension support members 20a and 20b for supporting the rear suspension device 10. In this manner, the rear suspension device 10 is mounted via the rear suspension support members 20a and 20b to the rear side frames 18 which are directly connected to the battery case 14.

Although a detailed description will be omitted, the front vehicle body frame 8 is configured in a similar manner to the rear vehicle body frame 6, and rigidity of the lower portion of the vehicle body is increased by the frame members of four sides of the battery case 14 and the front vehicle body frame 8.

Next, the vehicle body 2 constituted of a monocoque body in the upper portion of the vehicle 1 shown in FIG. 1 and FIG. 2 is mounted to the frame members of the four sides of the battery case 14, the rear cross member 20, the front cross member 26, and the like in the lower portion of the vehicle body by fastening using bolts, welding, and the like to be integrally constructed as the vehicle 1.

Next, as shown in FIG. 2 to FIG. 5, a rear electric motor (motor) 30 which has a large output and which is to be used as a main drive source is provided in a rear portion of the vehicle. The rear electric motor 30 is connected to rear wheels 34 (indicated by imaginary lines in FIG. 4 and FIG. 5) via two output transmission shafts 32 which extend to the left and the right from the rear electric motor 30 and drives the rear wheels 34. In other words, in the vehicle 1 according to the present embodiment, the rear wheels are main drive wheels.

On the other hand, as shown in FIG. 2, a front electric motor (motor) 36 which has a smaller output than the rear electric motor 30 and which is to be used as an auxiliary drive source is provided in a front portion of the vehicle. The front electric motor 36 is connected to front wheels via two output transmission shafts which extend to the left and the right from the front electric motor 36 and drives the front wheels. Accordingly, in the vehicle 1 according to the present embodiment, the front wheels are auxiliary drive wheels.

Next, with reference to FIG. 3 to FIG. 5, a configuration of the rear suspension device 10 and a mounting structure thereof to the vehicle body will be explained. FIG. 4 and FIG. 5 show the rear suspension device 10 on a left side of the vehicle. Since the rear suspension device 10 on a right side of the vehicle shares a same configuration as the rear suspension device 10 on the left side of the vehicle, hereinafter, a description of the rear suspension device 10 on the right side of the vehicle will be omitted.

First, as shown in FIG. 3 to FIG. 5, the rear suspension device 10 includes a hub carrier 42 for supporting the rear wheel 34. In the hub carrier 42, an opening which holds a hub 44 and which is to be penetrated by an output transmission shaft (axle) 32 is formed in a center portion thereof.

In addition, the rear suspension device 10 includes a rear lower arm 46, a rear damper 48, and a toe control link 50 that are each coupled to the hub carrier 42. The rear damper 48 constitutes a shock absorber together with a coil spring 49.

As shown in FIG. 4, the rear suspension device 10 is positioned above a lower end of the battery case 14.

The suspension components described above will now be described in greater detail.

First, the rear lower arm 46 is an A-shaped lower arm, and a distal end portion thereof on a side of the wheel 34 is coupled via a swinging shaft 52 to a portion which protrudes downward from a center portion of the hub carrier 42. In the present embodiment, the swinging shaft 52 is constituted of a pillow ball joint.

On the other hand, the A-shaped rear lower arm 46 is coupled at two locations thereof on a vehicle body side to the rear suspension support members 20a and 20b via swinging shafts 54 and 56, respectively. In the present embodiment, each of the swinging shafts 54 and 56 is constituted of a bush housing, elastic bushing, a bolt shaft mounted on a vehicle body side, and the like.

In the present embodiment, as shown in FIG. 5, a position of each of the swinging shafts 54 and 56 is set such that a swinging axis A formed by each of the swinging shafts 54 and 56 extends in a direction coinciding with the vehicle front-rear direction in a bottom view (plan view).

In addition, in the present embodiment, as shown in FIG. 4, the position and an inclination of each of the swinging shafts 54 and 56 are set such that the swinging axis A formed by each of the swinging shafts 54 and 56 extends in an inclined manner in a direction of a predetermined obliquely-upward angle toward the front of the vehicle in a side view.

Next, as clearly shown in FIG. 3, a lower end portion of the rear damper 48 is mounted in a vehicle up-down direction in a distal end portion of a portion extending inward in the vehicle width direction above a center portion of the hub carrier 42. On the other hand, an upper end portion of the rear damper 48 is mounted to the vehicle body 2.

In the present embodiment, as shown in FIG. 4, the rear damper 48 is mounted to the hub carrier 42 and the vehicle body 2 so that a longitudinal direction axis B of the rear damper 48 (a direction of extension of the rear damper 48) vertically extends in a direction of 90 degrees relative to a direction of extension of the swinging axis A in a side view.

Next, the toe control link 50 is coupled to a portion which protrudes rearward from a center portion of the hub carrier 42.

Although a detailed description will be omitted, the front suspension device 12 is also constituted of a hub carrier, a lower arm, a damper, a tie rod, and the like similar to those of the rear suspension device 10 and shares a similar geometry with the rear suspension device 10.

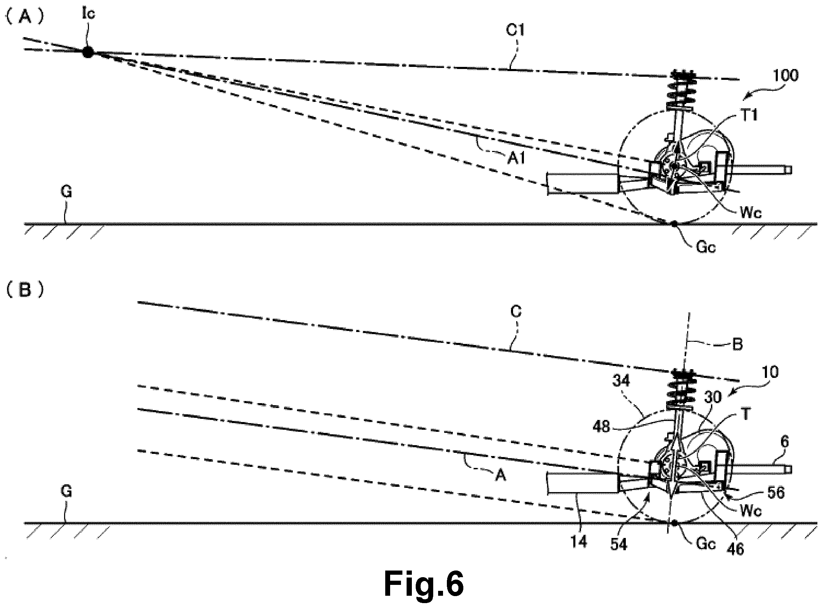

Next, a main geometric configuration of the suspension device according to the embodiment of the present invention will be described with reference to FIG. 6. FIG. 6 is a conceptual diagram for explaining a relationship between an anti-tail-lift angle during friction braking and an anti-tail-lift angle during regenerative braking according to a comparative example (A) and the embodiment of the present invention (B). FIG. 6 shows the rear suspension device 10 (100). In the present embodiment, since the front suspension device 12 also shares a same geometric configuration as the rear suspension device 10, hereinafter, a description of the front suspension device 12 will be omitted.

Note that FIG. 6 shows a state of each portion when the vehicle is stationary (a 1G state). FIG. 3 to FIG. 5 described above also show a state of each portion when the vehicle is stationary.

First, as shown in FIG. 6(A), in a conventional vehicle according to the comparative example, normally, an instantaneous center of rotation Ic of the rear suspension device 100 is set to be positioned higher than and closer to the inside of the vehicle than the rear suspension device 100 in a side view so that a predetermined anti-tail-lift force is obtained during braking. Note that the instantaneous center of rotation Ic is an intersection of an imaginary line C1 which is perpendicular to a longitudinal direction axis of a rear damper and a swinging axis A1 of a lower arm.

When using regenerative brakes in a vehicle with an electric motor (a so-called electric car), since an operation point of a braking force thereof is a wheel center Wc, an anti-tail-lift angle is an angle of a line (indicated by a dashed line in FIG. 6(A)) connecting the instantaneous center of rotation Ic and the wheel center Wc to each other relative to the ground G. On the other hand, when using friction brakes (such as disk brakes inside the wheels), since an operation point of a braking force thereof is a center of tire-ground contact Gc, the anti-tail-lift angle is an angle of a line (indicated by a dashed line in FIG. 6(A)) connecting the instantaneous center of rotation Ic and the center of tire-ground contact Gc to each other relative to the ground G.

Therefore, in comparative examples such as that shown in FIG. 6(A), changing braking forces of friction brakes and regenerative brakes when, for example, the friction brakes and the regenerative brakes are subjected to coordinated control or switching between the friction brakes and the regenerative brakes is carried out causes a pitching behavior of the rear portion of the vehicle to change due to a difference in anti-tail-lift angles and, accordingly, the behavior of the entire vehicle becomes unstable.

Note that, in FIG. 6(A), a reference sign T1 denotes a trajectory of motion of the rear wheel, and the swing trajectory T1 is a trajectory which extends in an arc shape in a direction perpendicular to the line connecting the instantaneous center of rotation Ic and the wheel center Wc to each other.

On the other hand, in the present embodiment, as shown in FIG. 6(B) and FIG. 4, the longitudinal direction axis B of the rear damper 48 extends perpendicular to the swinging axis A in a side view and, accordingly, an imaginary line C which is perpendicular to the longitudinal direction axis B of the rear damper 48 extends parallel to the swinging axis A.

In addition, in the present embodiment, as shown in FIG. 5, the swinging axis A extends in a direction coinciding with the vehicle front-rear direction in a bottom view (plan view).

Furthermore, in the present embodiment, by causing the swinging axis A to extend in a direction coinciding with the vehicle front-rear direction in a bottom view, as shown in FIG. 6(B), a ball joint 52 of the rear lower arm 46 and the rear wheel 34 linearly swing (a swing trajectory thereof is denoted by a reference sign T) in an up-down direction which coincides with a direction of extension of the longitudinal direction axis B of the rear damper 48. Since the rear lower arm 46 swings around the swinging axis A which extends in the vehicle front-rear direction, the swing trajectory T of the ball joint 52 on a wheel-side assumes a linear shape in a side view.

In addition, in the present embodiment, as shown in FIG. 6(B) and FIG. 4, the swinging axis A of the rear lower arm 46 is extended obliquely upward toward the front of the vehicle in a side view and, accordingly, an anti-lift angle is formed in the rear suspension device 10.

In the present embodiment, due to a suspension geometry set as described above, as shown in FIG. 6(B), an anti-tail-lift angle when using regenerative brakes and an anti-tail-lift angle when using friction brakes in the vehicle 1 with an electric motor are made to be similar angles. Accordingly, in the present embodiment, for example, during coordinated control of the friction brakes and the regenerative brakes, a change in a pitching behavior of the rear portion of the vehicle is suppressed to stabilize the behavior of the vehicle.

In addition, as shown in FIG. 6(B), by configuring the rear damper 48 to extend perpendicular to the swinging axis A in a side view, a linear swing direction (trajectory of motion) T of the rear wheel 34 and the longitudinal direction axis B of the rear damper are made to coincide with each other. Accordingly, in the present embodiment, a load transmitted from the rear wheel 34 is efficiently input to the rear damper 48 via the hub carrier 42 to operate the rear damper 48 in an efficient manner.

Furthermore, in the present embodiment, since the drive of the rear wheel 34 is used as a main drive by using the rear electric motor 30 as a main drive source with a large output, as shown in FIG. 6(B), due to the anti-lift angle formed in the rear suspension device 10, a lift of particularly the rear portion of the vehicle body can be suppressed during use of the regenerative brakes and the friction brakes.

As described above, the technical idea of the present invention is to, firstly, extend a damper 48 in a direction perpendicular to a swinging axis A and cause an imaginary line C which is perpendicular to a longitudinal direction axis B of the damper 48 to extend in a direction parallel to the swinging axis A in a side view so as to create a state where an instantaneous center of rotation does not exist or to make an instantaneous center of rotation at a position separated by an infinite distance (in particular, with respect to a position of an instantaneous center of rotation Ic such as that shown in FIG. 6(A)) and, accordingly, suppress a change in a pitching behavior of a vehicle even when braking forces of regenerative brakes and friction brakes are changed.

In addition, the technical idea of the present invention is to, secondly, cause the swinging axis A to extend in a vehicle front-rear direction in a bottom view (plan view) so as to create a state where an instantaneous center of rotation does not exist or to make an instantaneous center of rotation at a position separated by an infinite distance (in particular, with respect to a position of an instantaneous center of rotation Ic such as that shown in FIG. 6(A)) and, accordingly, suppress a change in a pitching behavior of the vehicle even when braking forces of regenerative brakes and friction brakes are changed.

Furthermore, the technical idea of the present invention is to, thirdly, form an anti-lift angle by causing the swinging axis A to extend obliquely upward toward a front of the vehicle in a side view and, accordingly, suppress a change in a pitching behavior of the vehicle (in particular, a change in a pitching behavior of a rear portion of the vehicle) during coordinated control of the regenerative brakes and the friction brake and the like.

Moreover, the technical idea of the present invention is to, fourthly, cause the swinging axis A to extend in the vehicle front-rear direction in a bottom view (plan view) and, at the same time, cause the damper 48 to extend in a direction perpendicular to the swinging axis A in a side view so that a linear swing direction (trajectory of motion) T of the rear wheel 34 (ball joint 52) and the longitudinal direction axis B of a rear damper coincide with each other and, accordingly, enable a load transmitted from the rear wheel 34 to be efficiently input to the rear damper 48.

The technical idea of the present invention described above is applied to the front suspension device 12 in a similar manner.

As described above, in the present invention, an angle of the longitudinal direction axis B of the damper relative to the swinging axis A in a side view, parallelism of the swinging axis A and the imaginary line C in a side view, and a direction of extension of the swinging axis A in a bottom view are important. On the other hand, these values are not limited to those in the embodiment described above and, for example, when designing a vehicle, performing an experiment with a test vehicle, or the like, the values may be adjusted to ranges (angle, parallelism, and direction) in which a change in a pitching behavior of the vehicle can be substantially suppressed during coordinated control of friction brakes and regenerative brakes and the like in consideration of a length of a wheel base or a position of the center of gravity of the vehicle, motion of each portion during swinging of the suspension, and the like which affect the pitching behavior of the vehicle. For example, the angle formed by the swinging axis A and the longitudinal direction axis B of the rear damper 48 is preferably set to a range of 90° ± 2.5°.

As a modification of the vehicle 1 according to the present embodiment, only the front electric motor 36 may be provided as the electric motor to drive the front wheels 40 and make the vehicle 1 a front-wheel drive vehicle, only the rear electric motor 30 may be provided as the electric motor to drive the rear wheels 34 and make the vehicle 1 a rear-wheel drive vehicle, or the front wheels 40 and the rear wheels 34 may be driven by a single electric motor.

In addition, the present invention is not limited to the strut-type suspension device described above and can also be applied to suspension devices of other types. For example, with a double wishbone-type suspension device, by causing a swinging axis of a lower arm and a swinging axis of an upper arm to extend in directions parallel to each other in a side view and causing the swinging axes to extend in a direction coinciding with the vehicle front-rear direction in a bottom view (plan view), a similar effect of suppressing a change in a pitching behavior of the vehicle even when braking forces of regenerative brakes and friction brakes are changed can be obtained. A similar effect can also be obtained by a measure of causing each swinging axis to extend obliquely upward toward the front of the vehicle in a side view.

Next, a working effect of the present embodiment will be described.

The present embodiment is a suspension device 10 for a vehicle 1 equipped with an electric motor 30 for transmitting a drive force to wheels 34 via an output transmission shaft 32, the suspension device 10 including: a suspension arm 46 which is coupled to a vehicle body side and a wheel side and which is capable of swinging in a vehicle up-down direction; and a damper 48 which extends in a direction perpendicular to a swinging axis A in a vehicle body-side mounting portion of the suspension arm 46 in a side view, wherein the swinging axis A of the suspension arm 46 and an imaginary line C perpendicular to a direction of extension of the damper 48 extend in a direction parallel to each other in a side view.

According to the present embodiment configured as described above, by preventing a difference in anti-lift angles of regenerative brakes and friction brakes during braking from occurring, a change in a pitching behavior of the vehicle can be suppressed even when a braking force of the regenerative brakes and a braking force of the friction brakes are changed during, for example, coordinated control of the regenerative brakes and the friction brakes.

In addition, according to the present embodiment, since the swinging axis A of the suspension arm 46 extends in a direction coinciding with the vehicle front-rear direction in a bottom view, a change in the behavior of the vehicle 1 during use of the regenerative brakes and the friction brakes can be suppressed more reliably and a sense of discomfort imparted to an occupant can be reduced. Furthermore, since the swinging axis A of the suspension arm 46 extends in a direction coinciding with the vehicle front-rear direction in a bottom view, a wheel 34 (a wheel center Wc) can be made to linearly swing in a same direction as a direction of extension of a longitudinal direction axis B of the damper 48 and, accordingly, a change in the behavior of the vehicle 1 during use of the regenerative brakes and the friction brakes can be suppressed more effectively.

Furthermore, according to the present embodiment, since the suspension device of the vehicle 1 is a rear suspension device 10 for the rear wheel 34 as a main drive wheel and the swinging axis A of the suspension arm 46 of the rear suspension device 10 extends obliquely upward in an inclined manner toward a front of the vehicle in a side view, an anti-lift angle can be formed in the rear suspension device 10. Due to such an anti-lift angle, particularly, a lift of the rear portion of the vehicle body during use of the regenerative brakes and the friction brakes is suppressed and, accordingly, a change in the pitching behavior of the vehicle 1 during use of the regenerative brakes and the friction brakes can be suppressed more effectively.

In addition, according to the present embodiment, since the suspension arm 46 is mounted to a rear vehicle body frame 6 directly connected to a rear end portion 14b of a battery case 14 in a lower portion of a center of the vehicle (specifically, mounted (to a rear side frame 18 via rear suspension support members 20a and 20b) and, at the same time, the suspension arm 46 is positioned above a lower end of the battery case 14, support rigidity of the wheel 34 can be enhanced and a response delay to vehicle behavior (for example, a response delay to a cornering force) can be reduced.

Furthermore, according to the present embodiment, since the rear suspension device 10 is a strut-type suspension device including a hub carrier 42 in which an opening for allowing penetration by and for holding an output transmission shaft 32 is formed in a center portion thereof and which supports the wheel 34, wherein a lower portion of the damper 48 is mounted to the hub carrier 42, and an upper portion of the damper 48 is mounted to the vehicle body 2, a change in the behavior of the vehicle during use of the regenerative brakes and the friction brakes can be suppressed with the strut-type suspension which is a relatively simple construction.

### [Reference Signs List]

- 1: Vehicle
- 2: Vehicle body
- 4: Battery assembly
- 6: Rear vehicle body frame
- 8: Front vehicle body frame
- 10: Rear suspension device
- 12: Front suspension device
- 14: Battery case
- 18: Rear side frame
- 20a,: 20b Rear cross member, Rear suspension support member
- 30: Rear electric motor
- 32: Output transmission shaft
- 34: Rear wheel
- 36: Front electric motor
- 42: Hub carrier
- 46: Rear lower arm
- 48: Rear damper
- 52: Wheel-side swinging shaft (pillow ball joint) of rear lower arm
- 54,: 56 Vehicle body-side swinging shaft of rear lower arm
- A: Swinging axis of rear lower arm/front lower arm
- B: Longitudinal direction axis of rear damper (direction of extension of damper)
- C: Imaginary line perpendicular to longitudinal direction axis of rear damper
- G: Ground
- Ic: Instantaneous center of rotation
- Wc: Wheel center
- Gc: Center of tire-ground contact
- T, T1: Swing trajectory of rear wheel

## Claims

1. A suspension device (10) for a vehicle (1) equipped with an electric motor (30) for transmitting a drive force to wheels (34) via an output transmission shaft (32), the suspension device (10) comprising:
a suspension arm (46), which is coupled to the side of a vehicle body (2) of the vehicle (1) and to the side of a wheel (34), and which is configured to be movable for swinging in a vehicle up-down direction; and
a damper (48) which extends in a direction perpendicular to a swinging axis (A1) in a vehicle body-side mounting portion of the suspension arm (46) in a side view, wherein
the swinging axis (A1) of the suspension arm (46) and an imaginary line (C1) perpendicular to a direction of extension of the damper (48) extend in a direction parallel to each other in a side view.

2. The suspension device for a vehicle according to claim 1, wherein the swinging axis (A1) of the suspension arm (46) extends in a direction coinciding with a vehicle front-rear direction in a bottom view.

3. The suspension device for a vehicle according to any one of the preceding claims, wherein the suspension device (10) is a rear suspension device for a rear wheel as a main drive wheel, and the swinging axis (A1) of the suspension arm (46) of the rear suspension device extends obliquely upward in an inclined manner toward a front of the vehicle (1) in a side view.

4. The suspension device for a vehicle according to any one of the preceding claims, wherein the suspension arm (46) is mounted to a vehicle body frame (6), which is directly connected to a rear end portion of a battery case (14) in a lower portion of a center of the vehicle (1), and which extends in the vehicle front-rear direction, wherein the suspension arm (46) is positioned above a lower end of the battery case (14).

5. The suspension device for a vehicle according to any one of the preceding claims, wherein the suspension device (46) is a strut-type suspension device including a hub carrier (42), in a center portion of which an opening for allowing penetration by and for holding the output transmission shaft (32) is formed, and which supports a wheel (34), wherein a lower portion of the damper (48) is mounted to the hub carrier (42), and wherein an upper portion of the damper (48) is mounted to the vehicle body (2) .

6. A vehicle (1) having a vehicle body (2), wheels (34), an electric motor (30) and an output transmission shaft (32), the electric motor (30) configured for transmitting a drive force to the wheels (34) via the output transmission shaft (32), the vehicle (1) further comprising a suspension device (10) according to any one of the preceding claims.

7. The vehicle according to claim 6, wherein the wheels (34) are rear wheels, the electric motor (30) is a rear electric motor (30) and the suspension device (10) is a rear suspension device.
